# EUROPEAN PATENT APPLICATION

(11) **EP 2 088 461 A2**
(43) Date of publication of application: **12.08.2009**
(21) Application number: 09151974.4
(22) Date of filing: 03.02.2009
(51) Int. Cl.: G02B 26/02

(54) **Liquid optical element**

(30) Priority: 05.02.2008 JP 2008025275; 09.12.2008 JP 2008313151
(71) Applicant: Sony Corporation, Tokyo (JP)
(72) Inventor: Takahashi, Kenichi, TOKYO (JP)
(74) Representative: Thévenet, Jean-Bruno

(57) **Abstract**

A liquid optical element (10) includes: an insulating film (13); a wall structure (14) arranged upright on the insulating film (13) to surround a region on the insulating film (13); a first electrode (12) arranged in contact with the insulating film (13); a second electrode (17) arranged to face the first electrode (12); and a polar liquid (16) and a nonpolar liquid (15) sealed between the insulating film (13) and the second electrode (17) to a state where the polar liquid (16) and the nonpolar liquid (15) are separated from each other. One of the polar liquid (16) and the nonpolar liquid (15) is transparent, while the other is opaque. At least one of the first electrode (12) and the second electrode (17) has an aperture or a notch in a region corresponding to the region surrounded by the wall structure (14).

## Description

The present invention contains subject matter related to Japanese Patent Application JP 2008-025275 filed in the Japanese Patent Office on February 5, 2008, and Japanese Patent Application JP 2008-313151 filed in the Japanese Patent Office on December 9, 2008.

### BACKGROUND OF THE INVENTION

### 1. Field of the Invention

The present invention relates to a liquid optical element including a nonpolar liquid and a polar liquid between a pair of electrodes, and changing the amount of transmitted light by application of a voltage between the pair of electrodes.

### 2. Description of the Related Art

An electrowetting technique in which a desired effect is obtained by such a phenomenon that electrostatic wettability is controlled to change the shape of a droplet of a liquid and move the liquid has been known, and the application of the electrowetting technique to various fields has been examined.

For example, using the electrowetting technique for an optical shutter in a display to improve light extraction efficiency or response speed has been examined as described in, for example, published Japanese Translation No. 2007-500876 of the PCT International Publication.

### SUMMARY OF THE INVENTION

In a typical liquid optical element using such an electrowetting technique, a polar liquid (for example, water) and a nonpolar liquid (for example, silicon oil) are sandwiched between a pair of electrodes covered with a hydrophobic insulating film, and the shapes of droplets of the polar liquid and the nonpolar liquid are changed by the application of a voltage to the polar liquid and the nonpolar liquid so as to control the amount of transmitted light (the intensity of transmitted light). However, the shapes of the droplets of the liquids before and after change are unstable, and the amount of transmitted light with respect to a drive voltage develops hysteresis, and the response speed to changes in the shapes of the droplets of the liquids with the application of a voltage easily varies. Further, there is a limit on improvement in response speed.

It is desirable to provide a liquid optical element having high response speed and being capable of stably controlling the intensity of transmitted light while having a simple configuration.

According to an embodiment of the invention, there is provided a liquid optical element including the following components (1) to (5):
(1) an insulting film;
(2) a wall structure arranged upright on the insulating film, and surrounding a region on the insulating film;
(3) a first electrode arranged in contact with the insulating film on an opposite side of the insulating film from a side where the wall structure is arranged;
(4) a second electrode arranged so as to face the first electrode on an opposite side of the insulating from a side where the first electrode is arranged; and
(5) a polar liquid and a nonpolar liquid sealed between the insulating film and the second electrode, and keeping a state where the polar liquid and the nonpolar liquid are separated from each other, one of the polar liquid and the nonpolar liquid being transparent, the other being opaque.

In this case, at least one of the first electrode and the second electrode has an aperture or a notch in a region corresponding to the region surrounded by the wall structure.

In the liquid optical element according to the embodiment of the invention, when a voltage is applied between the first electrode and the second electrode, hydrophobicity of the insulating film with respect to the polar liquid is degreased by the generation of an electric charge in a region other than a region corresponding to the aperture or the notch occupying a part of the region surrounded by the wall structure, thereby the polar liquid enters into the region other than the region corresponding to the aperture or the notch. As a result, the nonpolar liquid gathers in the region corresponding to the aperture or the notch.

In the liquid optical element according to the embodiment, at least one of the first electrode and the second electrode has an aperture or a notch in a region corresponding to the region surrounded by the wall structure, so at the time of drive, the nonpolar liquid is able to gather in a region corresponding to the aperture or the notch with high reproducibility. Therefore, the shape of a droplet of the nonpolar liquid before and after change is stabilized, and the generation of hysteresis of the intensity of transmitted light with respect to a drive voltage is able to be prevented, and the response speed to a change in the shape of the droplet of the nonpolar liquid with respect to the operation of voltage application is highly stabilized. Therefore, the liquid optical element has superior responsivity and is able to stably control the amount of light.

Other and further objects, features and advantages of the invention will appear more fully from the following description.

### BRIEF DESCRIPTION OF THE DRAWINGS

FIG. 1 is a sectional view of the whole configuration of a liquid optical element according to an embodiment of the invention.
FIGs. 2A and 2B are a sectional view and a plan view of the configuration of a main part of the liquid optical element illustrated in FIG. 1, respectively.
FIGs. 3A and 3B are schematic views for describing the operation of the liquid optical element illustrated in FIG. 1.
FIG. 4 is a flowchart for describing a method of manufacturing the liquid optical element illustrated in FIG. 1.
FIG. 5 is a schematic sectional view for describing the method of manufacturing the liquid optical element illustrated in FIG. 1.
FIG. 6 is a schematic sectional view for describing a step following a step in FIG. 5.
FIG. 7 is a schematic sectional view for describing a step following the step in FIG. 6.
FIG. 8 is a schematic sectional view for describing a step following the step in FIG. 7.
FIG. 9 is a schematic sectional view for describing a step following the step in FIG. 8.
FIG. 10 is a schematic sectional view for describing a step following the step in FIG. 9.
FIGs. 11A, 11B and 11C are schematic views of first, second and third modifications of the liquid optical element according to the embodiment of the invention.
FIG. 12 is a block diagram of the whole configuration of an image display including a liquid optical element according to an embodiment of the invention.
FIG. 13 is a sectional view of the whole configuration of the liquid optical element mounted in the image display illustrated in FIG. 12.
FIG. 14 is a schematic plan view of the liquid optical element illustrated in FIG. 13.
FIG. 15 is a schematic view for describing the operation of the liquid optical element illustrated in FIG. 13.
FIG. 16 is a plan view of a fourth modification of the liquid optical element according to the embodiment of the invention.
FIG. 17 is a plan view of a fifth modification of the liquid optical element according to the embodiment of the invention.
FIG. 18 is a plot illustrating an example of a relationship between aperture occupancy, response time and hysteresis in Examples 1-1 to 1-4 of the invention.
FIG. 19 is a plot illustrating an example of a relationship between aperture occupancy, response time and hysteresis in Examples 1-5 to 1-8 of the invention.
FIG. 20 is a plot illustrating an example of a relationship between aperture occupancy, response time and hysteresis in Examples 1-9 to 1-11 of the invention.
FIG. 21 is a plot illustrating an example of a relationship between aperture occupancy, response time and hysteresis in Examples 1-12 to 1-14 of the invention.
FIG. 22 is a plot illustrating an example of a relationship between notch occupancy, response time and hysteresis in Examples 2-1 to 2-4 of the invention.
FIG. 23 is a plot illustrating an example of a relationship between notch occupancy, response time and hysteresis in Examples 2-5 to 2-8 of the invention.
FIG. 24 is a plot illustrating an example of a relationship between notch occupancy, response time and hysteresis in Examples 2-9 to 2-12 of the invention.
FIG. 25 is a plot illustrating an example of a relationship between notch occupancy, response time and hysteresis in Examples 2-13 and 2-14 of the invention.
FIGs. 26A and 26B are plan views of seventh and eighth modifications of the liquid optical element according to the embodiment of the invention.
FIGs. 27A and 27B are plan views of a ninth modification of the liquid optical element according to the embodiment of the invention.
FIGs. 28A, 28B and 28C are schematic views for describing the operation of a liquid optical element in related art.
FIG. 29 is a transmittance-voltage curve in a liquid optical element as a comparative example.

### DETAILED DESCRIPTION OF THE PREFERRED EMBODIMENTS

A preferred embodiment will be described in detail below referring to the accompanying drawings.

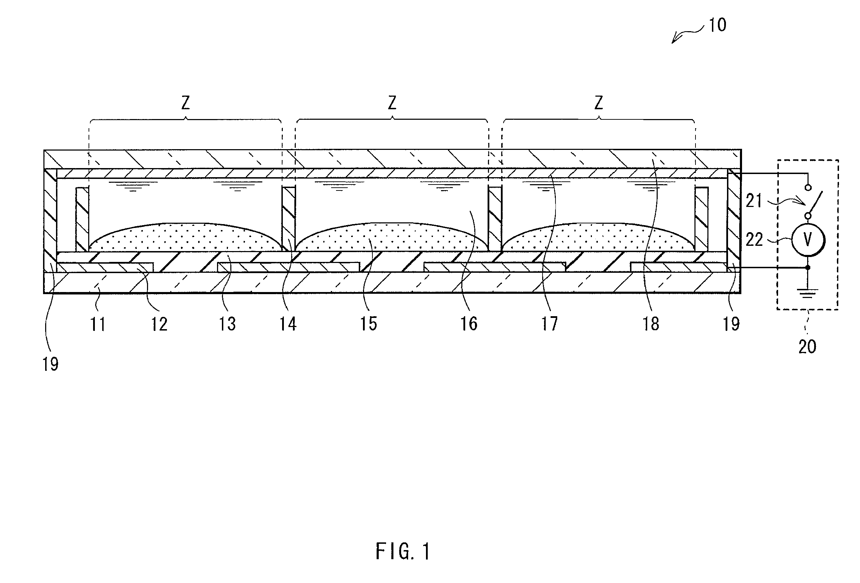

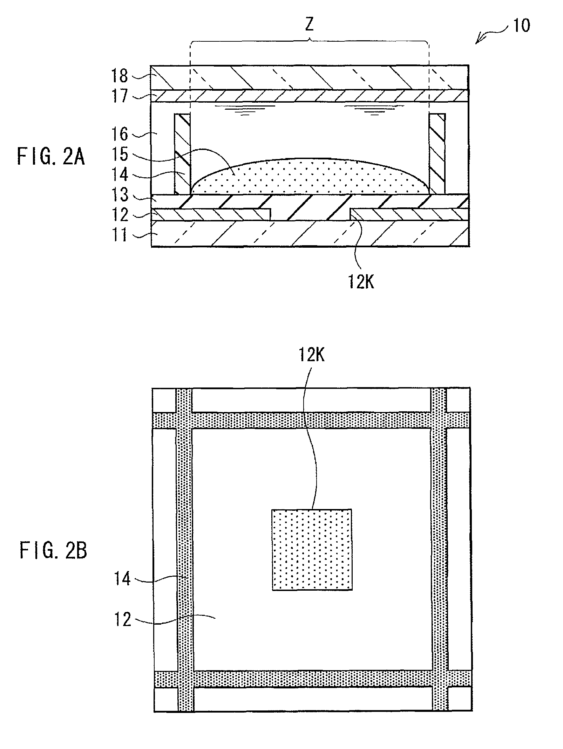

FIG. 1 is a sectional view of the whole configuration of a liquid optical element 10 as an embodiment of the invention. The liquid optical element 10 is a so-called electrowetting element which is connected to a control section 20, and controls the amount of transmitted light transmitting therethrough by such a phenomenon that electrostatic wettability is controlled to change the shape of a droplet of a contained polar liquid 16 which will be described later and move the polar liquid 16. In the liquid optical element 10, a plurality of cell regions Z are arranged in an array. In FIG. 1, three cell regions Z are illustrated; however, the number of cell regions Z is not limited to three. FIG. 2A illustrates an enlarged view of an arbitrary cell region Z in the liquid optical element 10 illustrated in FIG. 1. FIG. 2B illustrates a plan view corresponding to FIG. 2A. As illustrated in FIG. 2B, each cell region Z has, for example, a square shape. In FIG. 2B, components such as a hydrophobic insulating film 13, a nonpolar liquid 15, the polar liquid 16, an upper electrode 17, an upper substrate 18 and a side wall 19 all of which will be described later are not illustrated.

The liquid optical element 10 includes a lower substrate 11, a lower electrode 12 selectively arranged on the lower substrate 11, the hydrophobic insulating film 13 laid over the lower substrate 11 and the lower electrode 12, a barrier rib 14, the nonpolar liquid 15, the polar liquid 16, the upper electrode 17, the upper substrate 18 and the side wall 19.

The lower substrate 11 and the upper substrate 18 are arranged so as to be supported by the side wall 19 and to face each other, and are made of, for example, a transparent insulating material transmitting visible light therethrough such as glass or transparent plastic.

The lower electrode 12 and the upper electrode 17 are made of, for example, a transparent conductive material such as indium tin oxide (ITO) or zinc oxide (ZnO). The lower electrode 12 and the upper electrode 17 are connected to the control section 20. In the lower electrode 12, an aperture 12K is arranged in each cell region Z. For example, the aperture 12K has a shape similar to the cell region Z (in this case, a square shape), and the central position of the aperture 12K preferably matches the central position of the cell region Z.

The hydrophobic insulating film 13 is made of a material exhibiting hydrophobicity (water repellency) with respect to the polar liquid 16, more strictly a material exhibiting an affinity for the nonpolar liquid 15 under a zero electric field, and having superior electrical insulation properties. More specifically, polyvinylidene fluoride (PVdF) or polytetrafluoroethylene (PTFE) as a fluorine-based polymer may be used. For the purpose of further improving electrical insulation properties to the lower electrode 12 and the upper electrode 17, another insulating film made of, for example, spin-on glass (SOG) may be arranged between the lower electrode 12 and the hydrophobic insulating film 13.

The barrier rib 14 is provided to set the cell region Z which is a unit region transmitting light therethrough, and is arranged upright on the hydrophobic insulating film 13. The nonpolar liquid 15 is held in the cell region Z sectioned by the barrier rib 14. In other words, the nonpolar liquid 15 is prevented from moving (flowing) to any other cell region Z adjacent to the cell region Z with the barrier rib 14 in between. The barrier rib 14 is preferably made of a material exhibiting hydrophilicity with respect to the polar liquid 16 and not dissolving in the nonpolar liquid 15 and the polar liquid 16, for example, an epoxy-based resin, an acrylic-based resin or the like. Alternatively, the surface of the barrier rib 14 is preferably covered with a coating made of the above-described material. Thus, the shape of a droplet of the nonpolar liquid 15 is able to be stabilized, and leakage of the nonpolar liquid 15 is able to be prevented more reliably.

The nonpolar liquid 15 is a liquid material having little polarity and exhibiting electrical insulation properties, and in addition to a hydrocarbon-based material such as decane, dodecane, hexadecane or undecane, for example, silicon oil or the like is suitably used. In the case where a voltage is applied to the nonpolar liquid 15, the influence of the nonpolar liquid 15 immediately after the application of the voltage is hardly exerted on wettability with respect to the hydrophobic insulating film 13. In the case where a voltage is not applied between the lower electrode 12 and the upper electrode 17, the nonpolar liquid 15 preferably has enough capacity to be laid over the surface of the hydrophobic insulating film 13 in each cell region Z.

On the other hand, the polar liquid 16 is a liquid material having polarity, and in addition to water, for example, a solution in which an electrolyte such as potassium chloride or sodium chloride is dissolved is preferably used. When a voltage is applied to the polar liquid 16, wettability with respect to the hydrophobic insulating film 13 (a contact angle between the polar liquid 16 and the hydrophobic insulating film 13) changes relatively largely.

The nonpolar liquid 15 and the polar liquid 16 sealed between the hydrophobic insulating film 13 and the upper electrode 17 in such a manner do not mix and are separated from each other, thereby to form two layers. Moreover, in the embodiment, while the polar liquid 16 is transparent, the nonpolar liquid 15 is opaque, because the nonpolar liquid 15 is tinted with a pigment or a dye absorbing a predetermined wavelength light (for example, visible light).

The side wall 19, together with the lower substrate 11 and the upper substrate 18, seals the nonpolar liquid 15 and the polar liquid 16, and is made of, for example, a material of the same kind as that of the lower substrate 11 and the upper substrate 18.

The control section 20 performs drive control on the liquid optical element 10. The control section 20 includes a switch 21 and a power source 22. One terminal of the switch 21 is connected to the upper electrode 17 through metal wiring, and the other terminal of the switch 21 is connected to the lower electrode 12 via the power source 22 through metal wiring. The switch 21 is able to switch between a turn-on state where both terminals are electrically connected to each other and a turn-off state where both terminals are electrically disconnected to each other. The power source 22 is able to change the magnitude of voltage within a predetermined range, and is able to set the magnitude of voltage arbitrarily. Therefore, the control section 20 allows a predetermined voltage to be applied between the lower electrode 12 and the upper electrode 17 by the operation of the switch 21 (the operation of switching between the turn-on state and the turn-off state) and the voltage control of the power source 22.

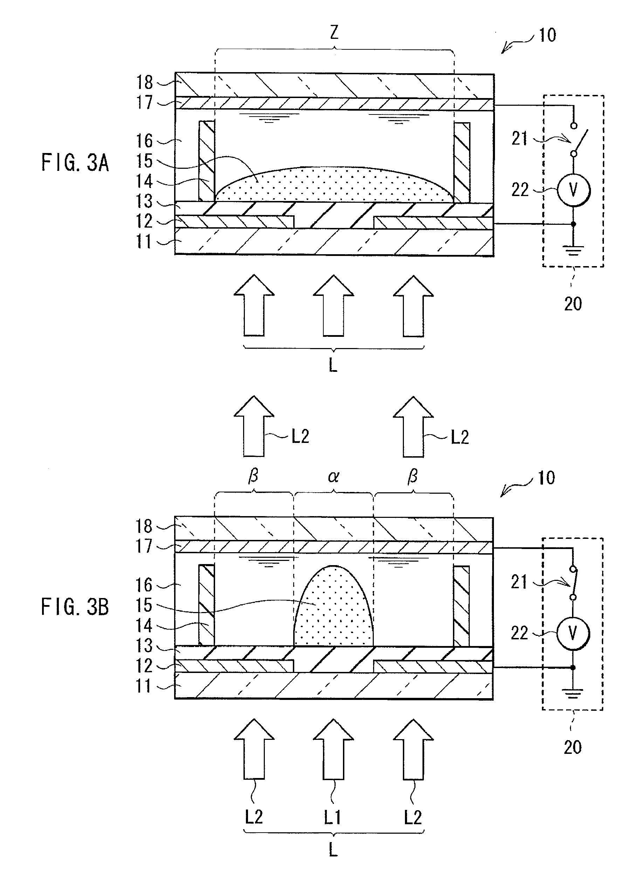

Next, referring to FIGs. 3A and 3B, the operation of the liquid optical element 10 with the above-described configuration will be described below.

At first, in the case where the switch 21 is in the turn-off state in the control section 20, and a voltage is not applied between the lower electrode 12 and the upper electrode 17, for example, as illustrated in FIG. 3A, the nonpolar liquid 15 is spread so as to be laid over the whole of each cell region Z. Therefore, external light L applied from the lower substrate 11 side is blocked by the color-tinted nonpolar liquid 15 so that the light L is not leaked to the other side. On the other hand, in the case where the switch 21 is in the turn-on state in the control section 20, and a voltage is applied between the lower electrode 12 and the upper electrode 17, for example, as illustrated in FIG. 3B, the polar liquid 16 comes into contact with the hydrophobic insulating film 13, and the nonpolar liquid 15 gathers in a region α corresponding to the aperture 12K of the lower electrode 12 in each cell region Z. Therefore, for example, while a part (light L1) entering into the region α of the external light L applied from the lower substrate 11 side is interrupted, a remaining part (light L2) entering into a region β is transmitted to the other side (the upper substrate 18 side). The behavior of the nonpolar liquid 15 results from a change in wettability between the polar liquid 16 and the hydrophobic insulating film 13 by the application of a voltage. More specifically, in the case where a voltage is applied between the lower electrode 12 and the upper electrode 17, an electric charge is stored in the region β corresponding to the lower electrode 12 in a laminate direction of a surface of the hydrophobic insulating film 13, so in the region (electric charge generation region) β in which the electric charge is stored, the polar liquid 16 having polarity is attracted to the hydrophobic insulating film 13 by the Coulomb force of the electric charge. In other words, in the region β, the wettability (the contact angle) of the polar liquid 16 with respect to the hydrophobic insulating film 13 changes (hydrophobicity with respect to the polar liquid 16 is decreased). Therefore, the nonpolar liquid 15 moves (the shape of a droplet of the nonpolar liquid 15 is changed) by the polar liquid 16 so as to be eliminated from the electric charge generation region β, and as a result, the nonpolar liquid 15 gathers in the region α as an electric charge non-generation region corresponding to the aperture 12K of the lower electrode 12.

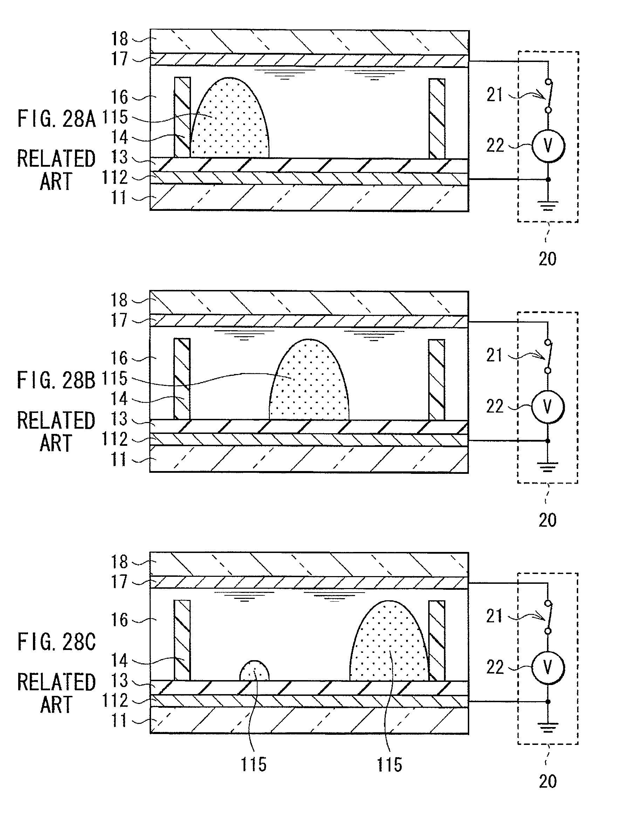

However, in a configuration in published Japanese Translation No. 2007-500876 of the PCT International Publication exemplified in Description of the Related Art, as illustrated in FIGs. 28A and 28B, a lower electrode 112 is expanded all over the cell region Z, so when a voltage is applied between the lower electrode 112 and the upper electrode 17, an electric charge is stored in the whole surface of the hydrophobic insulating film 13 in the cell region Z, so the position where a nonpolar liquid 115 having a changed shape of a droplet thereof gathers is not fixed in one position, and the shape of a droplet of the nonpolar liquid 115 is unstable. Moreover, in some cases, as illustrated in FIG. 28C, the nonpolar liquid 115 may be distributed among a plurality of positions. Therefore, such a case is not preferable, because response (a change in the shape of the droplet of the nonpolar liquid 115) to the operation of voltage application is delayed, and the amount of transmitted light becomes unstable by the development of hysteresis in a relationship between an applied voltage and transmittance.

On the other hand, in the embodiment, the nonpolar liquid 15 moves so as to consistently gather in a fixed position (the region α corresponding to the aperture 12K of the lower electrode 12), so the shape of the droplet of the nonpolar liquid 15 is changed through a short path by a change in voltage, thereby high responsivity is obtained. Moreover, the development of the above-described hysteresis is prevented.

FIG. 3B illustrates a state where the maximum transmittance (the maximum aperture ratio) is obtained; however, the size of the nonpolar liquid 15 is controlled by adjusting an applied voltage, thereby desired intensity of transmitted light is able to be obtained. In this case, the dimensions of the nonpolar liquid 15 are increased or decreased around the region α as a center.

Thus, in the liquid optical element 10 according to the embodiment, the aperture 12K is arranged in a part of the lower electrode 12 covered with the hydrophobic insulating film 13, and the region β in which an electric charge is stored on the surface of the hydrophobic insulating film 13 at the time of application of a voltage and the region α in which the electric charge is not stored are formed in the cell region Z, so while the liquid optical element 10 has a simple configuration, the liquid optical element 10 has high response speed, and is able to stably control the intensity of transmitted light. In particular, the central position of the aperture 12K matches the central position of the cell region Z, and the electric charge non-generation region (the region α) is arranged at the center of the cell region Z, so the average moving distance of the nonpolar liquid 15 at the time of application of a voltage becomes minimum, thereby the response speed is able to be further improved.

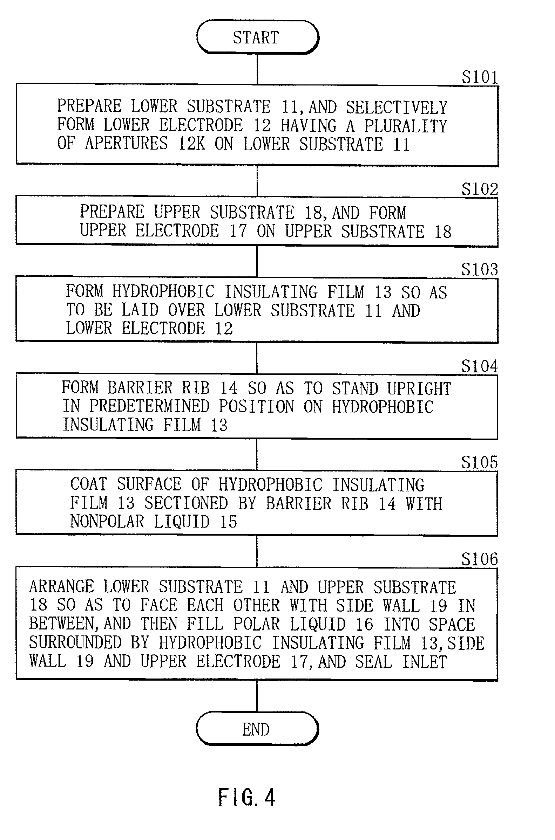

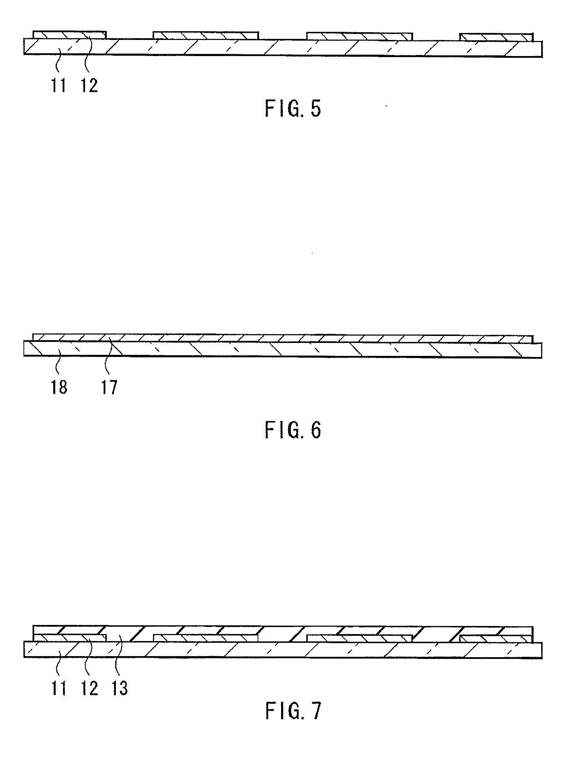

Next, a method of manufacturing the liquid optical element 10 will be described referring a flowchart illustrated in FIG. 4 and sectional views illustrated in FIGs. 5 to 10.

At first, as illustrated in FIG. 5, the lower substrate 11 made of a transparent insulating material such as glass or plastic is prepared, and the lower electrode 12 having a plurality of apertures 12K is formed of ITO or the like (step S101). More specifically, after the whole surface of the lower substrate 11 is covered with an ITO film, patterning is performed on the ITO film by, for example, a photolithography method to form the aperture 12K in each cell region Z. As illustrated in FIG. 6, the upper electrode 17 is formed on the upper substrate 18 in the same manner (step S102). However, it is not necessary to arrange apertures in the upper electrode 17.

Next, after the lower substrate 11 on which the lower electrode 12 is formed is cleaned, the hydrophobic insulating film 13 is formed by a wet process such as a spin coating method or a dip coating method or a dry process such as an evaporation method so as to be laid over the lower substrate 11 and the lower electrode 12 as illustrated in FIG. 7 (step S103). At this time, the hydrophobic insulating film 13 preferably has such a thickness that the surface of the hydrophobic insulating film 13 becomes flat. After that, if necessary, surface treatment (an ultraviolet/ozone process or an oxygen plasma ashing process) may be performed on the hydrophobic insulating film 13, or the surface of the hydrophobic insulating film 13 may be coated with a surfactant.

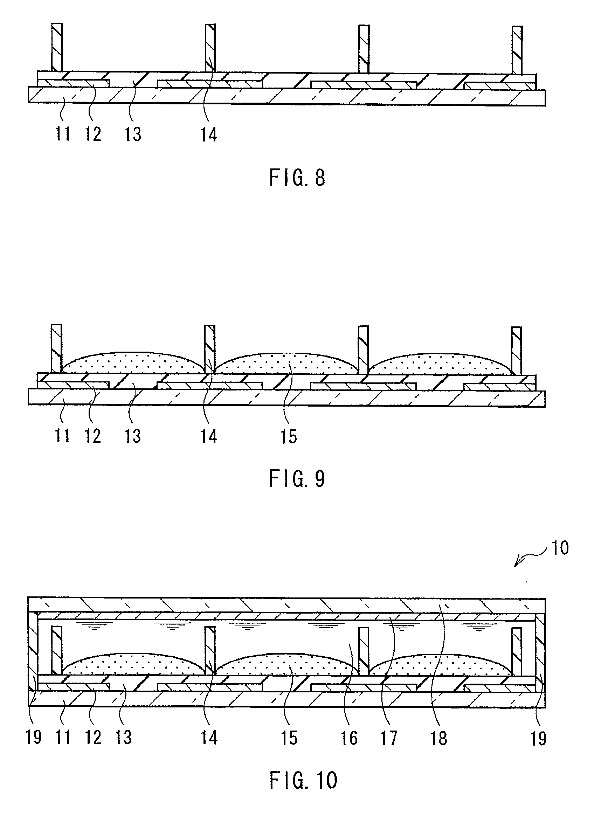

After the hydrophobic insulating film 13 is formed, as illustrated in FIG. 8, the barrier rib 14 is formed so as to stand upright on the hydrophobic insulating film 13 (step S104). More specifically, after the hydrophobic insulating film 13 is uniformly coated with a black pigment or a resin containing a coloring agent by, for example, a spin coating method, pattering is performed so that the barrier rib 14 has a pattern shape illustrated in FIG. 2B. Although it is not illustrated, the barrier rib 14 may have a two-layer configuration including a lower layer portion which blocks incident light and functions as a black matrix and an upper layer portion made of a transparent resin. After the barrier rib 14 is formed, if necessary, surface treatment (an ultraviolet/ozone process or an oxygen plasma ashing process) may be performed. Moreover, the surface of the barrier rib 14 may be coated with a coating exhibiting hydrophilicity with respect to the polar liquid 16.

Next, as illustrated in FIG. 9, the surface of the hydrophobic insulating film 13 in each cell region Z sectioned by the barrier rib 14 is coated with the nonpolar liquid 15 (step S105). Moreover, as illustrated in FIG. 10, after the upper substrate 18 on which the upper electrode 17 is formed in the step S102 is cleaned, the lower substrate 11 and the upper substrate 18 are arranged at a uniform distance from each other so as to face each other with the side wall 19 in between. After that, the polar liquid 16 is filled into a space surrounded by the hydrophobic insulating film 13, the side wall 19 and the upper electrode 17 from a predetermined inlet (not illustrated), and then the inlet is sealed (step S106). The liquid optical element 10 having superior responsivity is able to be easily manufactured by the above-described steps.

### First Modification

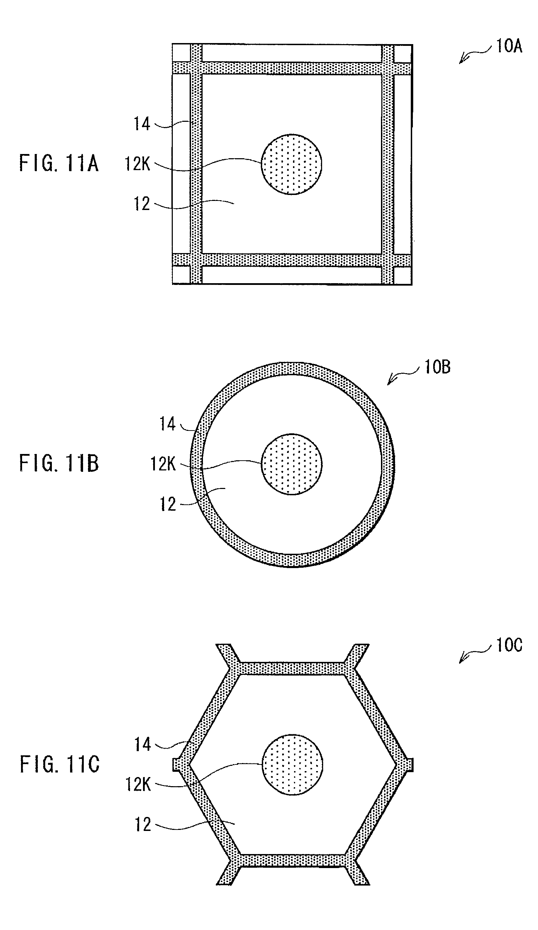

FIG. 11A illustrates a liquid optical element 10A as a first modification of the embodiment, and is a plan view corresponding to FIG. 2B. The liquid optical element 10A has the same configuration as that of the liquid optical element 10 illustrated in FIGs. 2A, 2B and the like, except that the aperture 12K of the lower electrode 12 has a circular shape.

In the liquid optical element 10A, the aperture 12K has a circular shape, so when a voltage is applied between the lower electrode 12 and the upper electrode 17, the nonpolar liquid 15 gathers in a region (an electric charge non-generation region) corresponding to the aperture 12K. In this case, it is considered that variation in the surface tension of the nonpolar liquid 15 is reduced, thereby the shape of the droplet of the nonpolar liquid 15 is able to be maintained stably. Therefore, compared to the liquid optical element 10 having the square-shaped aperture 12K, hysteresis is further reduced, and further improvement in response speed is expected.

### Second Modification

FIG. 11B illustrates a liquid optical element 10B as a second modification of the embodiment, and is a plan view corresponding to FIG. 2B. The liquid optical element 10B has the same configuration as that of the liquid optical element 10 illustrated in FIGs. 2A, 2B and the like, except that the aperture 12K of the lower electrode 12 and the cell region Z both have a circular shape.

In the liquid optical element 10B, the aperture 12K has a circular shape, and the barrier rib 14 surrounding the aperture 12K has a circular shape, so when a voltage is applied between the lower electrode 12 and the upper electrode 17, further improvement in response speed and a further reduction in hysteresis are able to be expected.

### Third Modification

FIG. 11C illustrates a liquid optical element 10C as a third modification of the embodiment, and is a plan view corresponding to FIG. 2B. The liquid optical element 10C has the same configuration as that of the liquid optical element 10 illustrated in FIGs. 2A, 2B and the like, except that the aperture 12K of the lower electrode 12 has a circular shape, and the cell region Z has a hexagonal shape.

In the liquid optical element 10C, the aperture 12K has a circular shape, and the barrier rib 14 surrounding the aperture 12K has a hexagonal shape, so when a voltage is applied between the lower electrode 12 and the upper electrode 17, compared to the liquid optical element 10A, an improvement in response speed and a reduction in hysteresis are able to be further expected, and compared to the liquid optical element 10B, a gap between the cell regions Z arranged in an array is not formed, so the aperture ratio is improved.

Next, specific application examples of the liquid optical element according to the above-described embodiment will be described below.

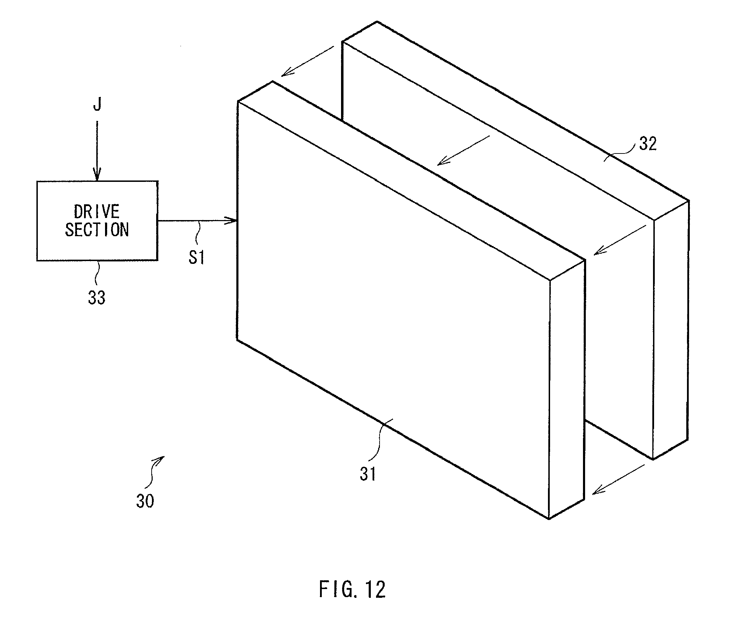

FIG. 12 is a block diagram of a schematic configuration of an image display 30 including a liquid optical element 40 (which will be described later) similar to the liquid optical element 10 according to the embodiment.

The image display 30 includes an image display section 31 displaying an image, a light source section 32 applying light for displaying an image to the image display section 31 and a drive section 33 performing drive control of the image display section 31, and the image display 30 is a transmissive display in which light emitted from the light source section 32 is transmitted through the image display section 31 to reach a viewer.

The light source section 32 is a mechanism which is described as a so-called backlight, and emits light for displaying an image, and the light source section 32 includes, for example, a hot-cathode tube, a cold-cathode tube, a light-emitting diode or the like.

The drive section 33 is a mechanism controlling the operation of the image display section 31 on the basis of image information (for example, a video signal) J supplied from outside.

The image display section 31 includes the liquid optical element 40 in which a plurality of cell regions Z are arranged in an array, and is arranged so as to face the light source section 32. The image display section 31 displays an image by controlling the transmission amount of incident light from the light source section 32 (controlling the intensity of emitted light) on the basis of a control signal S from the drive section 33.

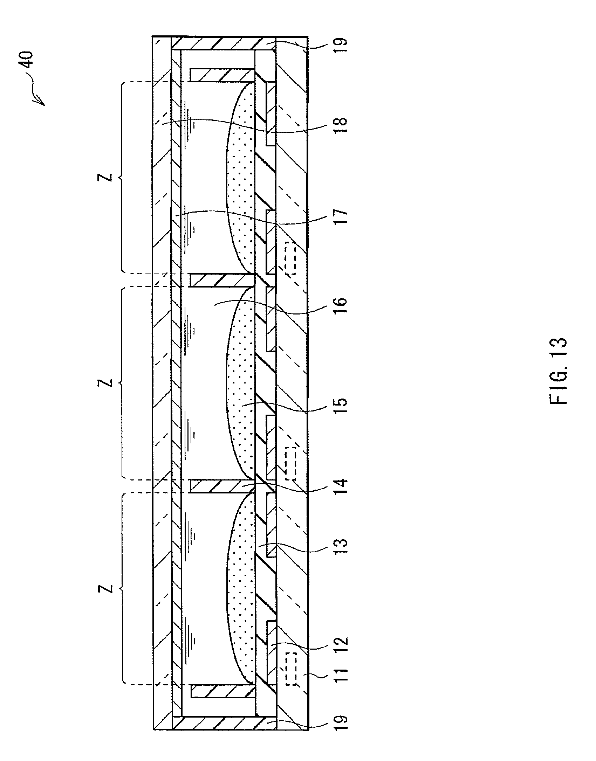

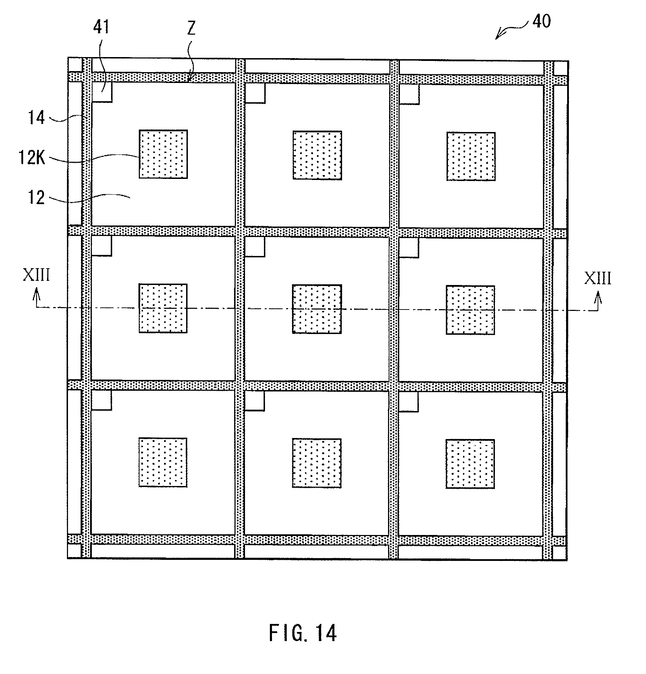

FIG. 13 illustrates a sectional view of the liquid optical element 40, and FIG.14 illustrates a plan view of the liquid optical element 40. FIG. 13 corresponds to a sectional view taken along a line XIII-XIII of FIG. 14. FIG. 14 illustrates a state where the cell regions Z are arranged in three rows and three columns; however, the number of the cell regions Z is not limited to the above-described number. Basically, the liquid optical element 40 has the same configuration as that of the liquid optical element 10 in FIG. 1 and the like. The lower electrode 12 is divided into a plurality of sections, and the plurality of sections are arranged for the cell regions Z, respectively, and are insulated from one another. Moreover, in the lower substrate 11 of the liquid optical element 40, a plurality of drive elements (thin film transistors or the like) 41 are arranged for the cell regions Z, respectively, and a pair of signal lines (for example, a gate line and a data line; not illustrated) connected to the drive section 33 are arranged to individually drive the drive elements 41. Further, the lower electrode 12 is connected to an end of each drive element 41, and the upper electrode 17 is maintained at a fixed potential. In other words, when a voltage is applied between the lower electrode 12 and the upper electrode 17 in each cell region Z, the transmission amount of incident light from the light source section 32 for each cell region Z is able to be controlled. The drive elements 41 or the pair of signal lines may be arranged in a substrate other than the lower substrate 11 of the liquid optical element 40, and may be mounted in the image display section 31. Moreover, while the polar liquid 16 is transparent, the nonpolar liquid 15 is tinted with a black pigment or a black dye. In this case, the image display 31 and the light source section 32 are arranged so that the incident light from the light source section 32 enters from, for example, the lower substrate 11 side.

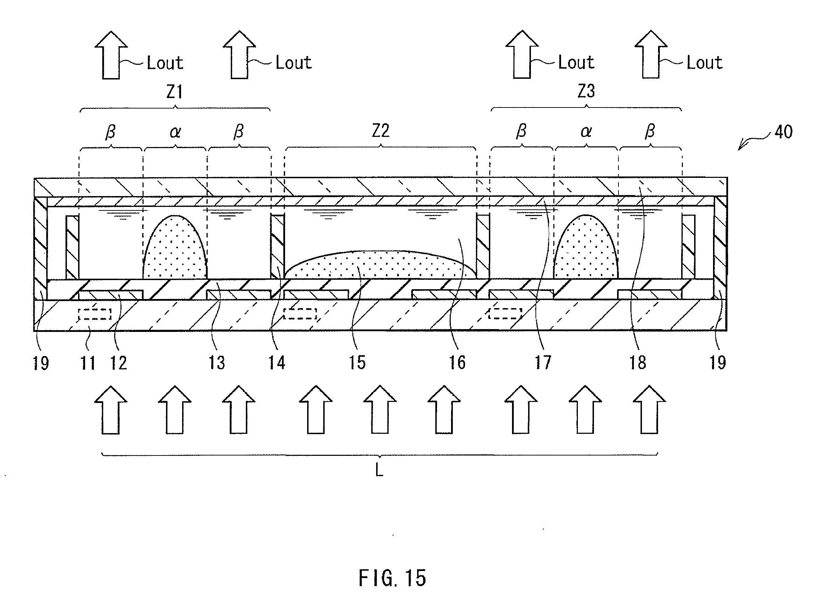

In the image display 30 including such a liquid optical element 40, predetermined image information J is inputted into the drive section 33, and the control signal S is transmitted from the drive section 33 to the image display section 31, thereby a voltage is individually applied to each cell region Z. For example, as illustrated in FIG. 15, a voltage is applied between the upper electrode 17 and the lower electrode 12 in cell regions Z1 and Z3 of three cell regions Z1 to Z3 to change the shape of the droplet of the nonpolar liquid 15, thereby when light L is applied from the light source section 32, transmitted light Lout is able to be extracted from the cell regions Z1 and Z3 (the regions β of the cell regions Z1 and Z3). As a result, in the case where, for example, the light source section 32 emits white light, white is displayed in sections corresponding to the cell regions Z1 and Z3, and black is displayed in a section corresponding to the cell region Z2. Therefore, a binary image is displayed on the whole liquid optical element 40. In this case, the behaviors of the polar liquid 16 and the nonpolar liquid 15 are the same as those in the liquid optical element 10, and will not be further described.

Moreover, in the image display 30, the magnitude of a voltage applied between the upper electrode 17 and the lower electrode 12 is controlled arbitrarily or in stages, thereby gray scales are able to be displayed by controlling the intensity of transmitted light in each cell region Z arbitrarily or in stages.

Further, the nonpolar liquid 15 in each cell region Z may be tinted with red (R), green (G) or blue (B) instead of black, and a color image may be displayed on the image display section 31 by transmitting only light of the same color as the color of the nonpolar liquid 15 of incident light from the light source section 32. Alternatively, a color image may be displayed, for example, by arranging a color filter between the upper substrate 18 and the upper electrode 17.

In the image display 30 according to the embodiment, the region β in which an electric charge is stored on the surface of the hydrophobic insulating film 13 at the time of application of a voltage and the region α in which an electric charge is not stored are formed in each cell region Z in the liquid optical element 40, so while the image display 30 has a simple configuration, the image display 30 has high response speed, and is able to control the intensity of transmitted light with high precision. Therefore, gray scales are able to be displayed with high definition.

### Fourth Modification

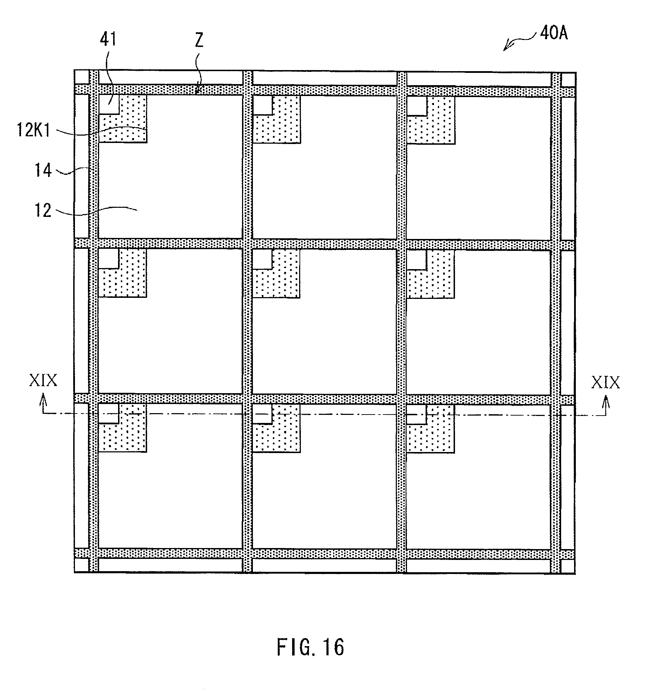

A liquid optical element 40A applicable to the image display 30 will be described as a fourth modification of the embodiment. FIG. 16 is a plan view of the liquid optical element 40A. As illustrated in FIG. 16, in the liquid optical element 40A, the drive element 41 is arranged in a corner of each cell region Z, and a notch 12K1 of the lower electrode 12 is arranged in a position corresponding to the drive element 41. The liquid optical element 40A is disadvantageous in response speed, compared to the liquid optical element 40 (in which the aperture 12K is arranged at the center of the cell region Z) illustrated in FIG. 13; however, in the liquid optical element 40A, incident light is emitted as transmitted light without having the influence of the drive element 41, that is, without attenuating the incident light or scattering a part of the incident light. Therefore, compared to the liquid optical element 40, the aperture ratio is able to be improved, and stability of transmittance is expected. Therefore, in the image display 40 using the liquid optical element 40A, an image with high luminance is able to be displayed, and gray scales are able to be displayed with high definition.

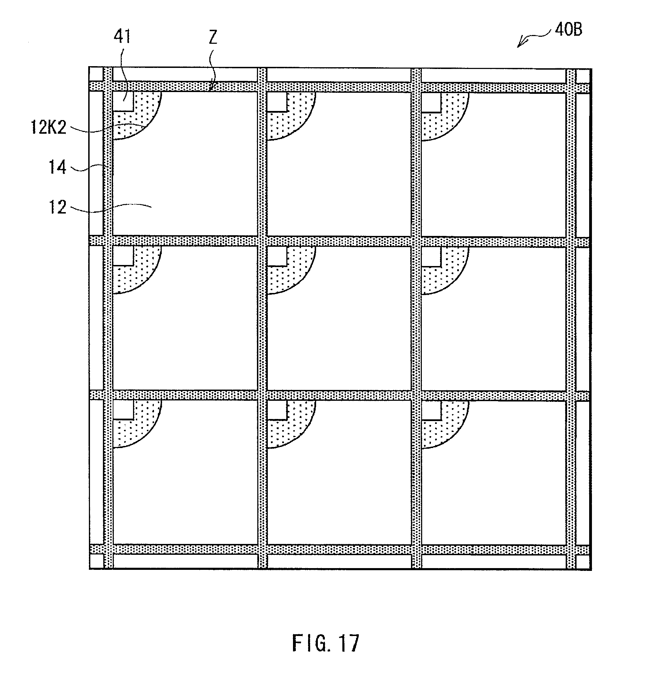

Moreover, a liquid optical element 40B as a fifth modification illustrated in FIG. 17 may be used in the image display section 31. The liquid optical element 40B is distinguished from the liquid optical element 40A in FIG. 16 by the fact that a notch 12K2 including a curve portion in its edge (having the shape of a sector instead of a rectangular shape) is included. Thereby, the response speed is higher than that of the liquid optical element 40A.

### Examples

Specific examples of the invention will be described below.

As Examples 1-1 to 1-4, the liquid optical elements 10 illustrated in FIGs. 1 to 3B were formed by changing aperture occupancy, that is, a ratio of the area of the aperture 12K to the area of the cell region Z (the area of the aperture 12K/the area of the cell region Z) as illustrated in Table 1 (which will be described later). In this case, the cell region Z and the aperture 12K both had a square shape, and the cell region Z and the aperture 12K were formed so that the center positions of the cell region Z and the aperture 12K matched each other. Glass substrates were used as the lower substrate 11 and the upper substrate 18, and ITO was used as the lower electrode 12 and the upper electrode 17. Moreover, the hydrophobic insulating film 13 was formed of Teflon AF (available from DuPont), and the barrier rib 14 was formed of a black resist (Alkaline Developable Black Resist NSBK available from Nippon Steel Chemical Co., Ltd.). Further, a material formed by dispersing carbon black into dodecane was used as the nonpolar liquid 15, and water was used as the polar liquid 16. The width of the barrier rib 14 was all 5 µm, and a distance between the lower electrode 12 and the upper electrode 17 was 100 µm.

As Examples 1-5 to 1-8, the liquid optical elements 10A illustrated in FIG. 11A were formed by changing aperture occupancy (a ratio of a region occupied by the aperture in the whole cell region). Other conditions are the same as those in Examples 1-1 to 1-4.

As Examples 1-9 to 1-11, the liquid optical elements 10A were formed as in the case of Examples 1-5 to 1-7, except that the dimensions of the cell region Z were changed (reduced).

As Examples 1-12 to 1-14, liquid optical elements were formed as in the case of Examples 1-1 to 1-3, except that the cell region Z had a rectangular shape, and the aperture 12K had a circular shape.

As Comparative Examples 1 to 3 relative to Examples 1-1 to 1-14, liquid optical elements were formed as in the case of Examples 1-1 to 1-8, 1-9 to 1-11 and 1-12 to 1-14, except that the aperture was not arranged in the lower electrode 12.

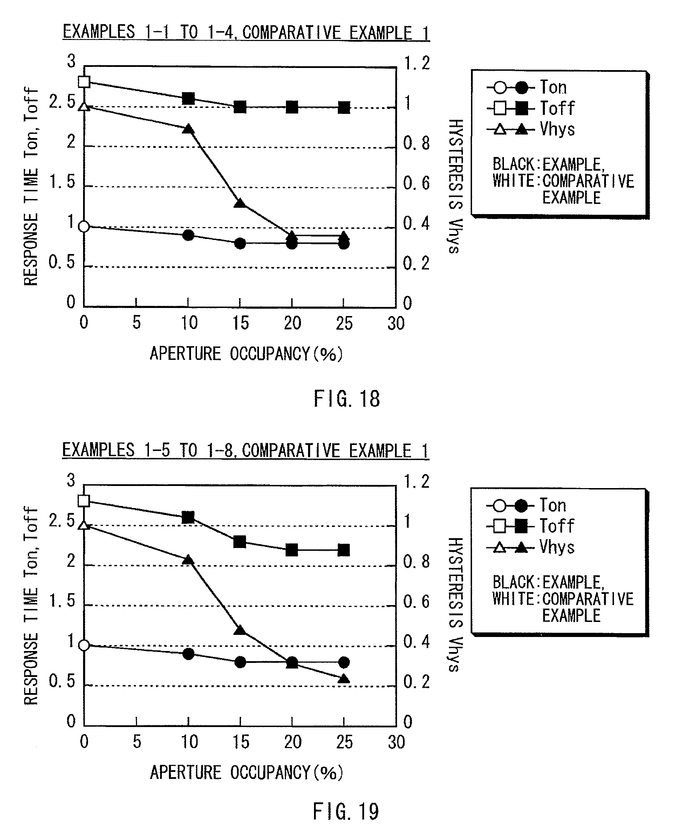

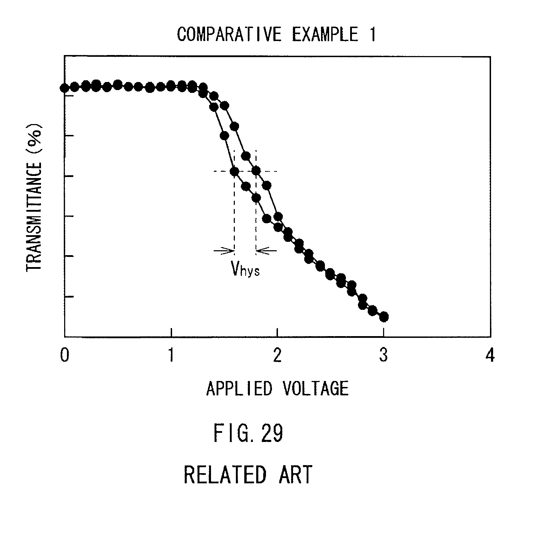

The dependence of transmittance on an applied voltage in each of the above-described examples and the above-described comparative examples were examined, and the response times T_{ON} and T_{OFF} and the hysteresis V_{hys} of transmittance were determined by calculation. The results are illustrated in Table 1 and FIGs. 18 to 21. The response time T_{ON} is a time necessary for transmittance to increase from 10% to 90% by a change in the shape of the droplet of the nonpolar liquid 15, and the response time T_{OFF} is a time necessary for transmittance to degrease from 90% to 10% by a change in the shape of the droplet of the nonpolar liquid 15. Moreover, the hysteresis V_{hys} means a difference between voltages in two points exhibiting the same transmittance on a transmittance-voltage curve exhibiting a relationship between transmittance and an applied voltage illustrated in FIG. 29. FIG. 29 is a transmittance-voltage curve in Comparative Example 1. In FIG. 29, the horizontal axis indicates an applied voltage (arbitrary unit) and the vertical axis indicates transmittance (%).

**Table 1**

| Shape of cell region Z: square shape or rectangular shape | | | | | | | |
|---|---|---|---|---|---|---|---|
| | CELL REGION Z | | APERTURE | | RESPONSE TIME | | HYSTERESIS V_{hys} |
| | LENGTH | WIDTH | SHAPE | OCCUPANCY (%) | T_{ON} | T_{OFF} | |
| EXAMPLE 1-1 | 1 | 1 | SQUARE | 10 | 0.9 | 2.6 | 0.89 |
| EXAMPLE 1-2 | 1 | 1 | SQUARE | 15 | 0.8 | 2.5 | 0.52 |
| EXAMPLE 1-3 | 1 | 1 | SQUARE | 20 | 0.8 | 2.5 | 0.36 |
| EXAMPLE 1-4 | 1 | 1 | SQUARE | 25 | 0.8 | 2.5 | 0.36 |
| EXAMPLE 1-5 | 1 | 1 | CIRCULAR | 10 | 0.9 | 2.6 | 0.83 |
| EXAMPLE 1-6 | 1 | 1 | CIRCULAR | 15 | 0.8 | 2.3 | 0.48 |
| EXAMPLE 1-7 | 1 | 1 | CIRCULAR | 20 | 0.8 | 2.2 | 0.31 |
| EXAMPLE 1-8 | 1 | 1 | CIRCULAR | 25 | 0.8 | 2.2 | 0.24 |
| EXAMPLE 1-9 | 0.49 | 0.49 | CIRCULAR | 10 | 0.5 | 1.3 | 0.48 |
| EXAMPLE 1-10 | 0.49 | 0.49 | CIRCULAR | 15 | 0.4 | 1.2 | 0.29 |
| EXAMPLE 1-11 | 0.49 | 0.49 | CIRCULAR | 20 | 0.4 | 1.2 | 0.10 |
| EXAMPLE 1-12 | 0.32 | 1 | CIRCULAR | 10 | 1.1 | 2.5 | 0.95 |
| EXAMPLE 1-13 | 0.32 | 1 | CIRCULAR | 15 | 1 | 2 | 0.71 |
| EXAMPLE 1-14 | 0.32 | 1 | CIRCULAR | 20 | 0.8 | 1.4 | 0.67 |
| COMPARATIVE EXAMPLE 1 | 1 | 1 | - | - | 1 | 2.8 | 1 |
| COMPARATIVE EXAMPLE 2 | 0.49 | 0.49 | - | - | 0.5 | 1.4 | 0.76 |
| COMPARATIVE EXAMPLE 3 | 0.32 | 1 | - | - | 1.1 | 2.8 | 1.00 |

In Table 1, the dimensions of the cell region Z, the response time T_{ON} and the hysteresis V_{hys} each indicate a normalized value on the basis of Comparative Example 1. The response time T_{OFF} indicates a value on the basis of the response time T_{ON} in Comparative Example 1.

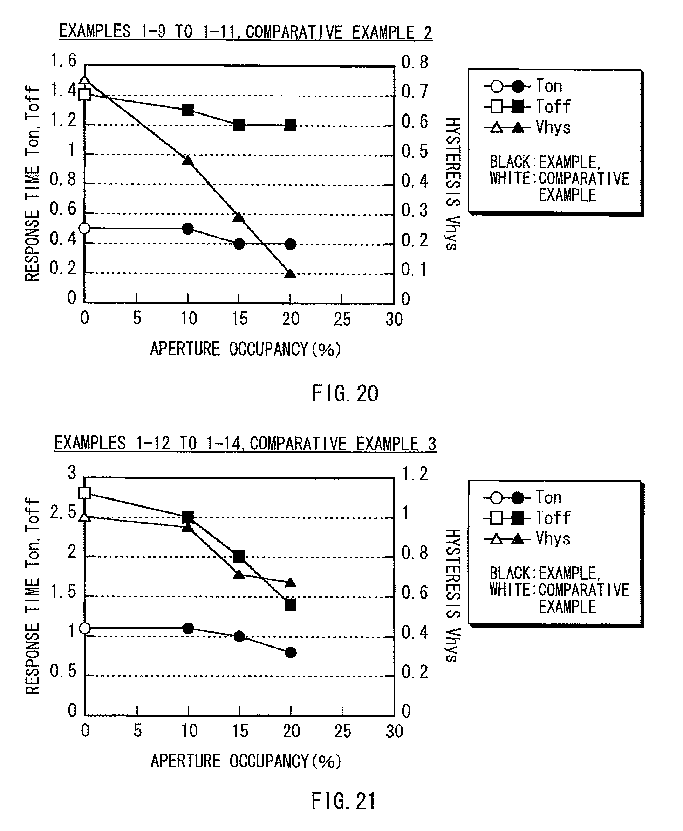

As illustrated in Table 1 and FIGs. 18 to 21, it was confirmed that in the case where the dimensions of the cell region Z were the same, when the aperture 12K was arranged in the lower electrode 12 as in the case of the examples, while the response times T_{ON} and T_{OFF} were equal to or less than those in the comparative examples, the hysteresis V_{hys} was able to be reduced. In particular, in comparison with Examples 1-1 to 1-4 (refer to FIG. 18) and Examples 1-5 to 1-8 (refer to FIG. 19), when the aperture 12K had a circular shape, it was more effective to reduce the response times T_{ON} and T_{OFF} and the hysteresis V_{hys} than when the aperture 12K had a square shape. In comparison with Examples 1-1 to 1-4 (refer to FIG. 18) and Examples 1-12 to 1-14 (refer to FIG. 21), the aperture 12K more preferably had a square shape than a rectangular shape. It was considered that there was a tendency that the larger the aperture occupancy was, the more the response times T_{ON} and T_{OFF} and the hysteresis V_{hys} were reduced; however, when the aperture occupancy was 20% or over, the response times T_{ON} and T_{OFF} became substantially uniform. When the aperture occupancy was extremely large, the aperture ratio was reduced, so in this point of view, it was desirable to minimize the aperture occupancy. When the aperture occupancy was less than 10%, it was difficult to have an effect of improving the response times T_{ON} and T_{OFF} and the hysteresis V_{hys}. Therefore, it was considered more desirable that the aperture 12K have a circular shape or a shape similar to a circular shape, and the aperture occupancy be within a range from 10% to 20% both inclusive.

Next, as Examples 2-1 to 2-4, the liquid optical elements 40A illustrated in FIG. 16 were formed by changing notch occupancy (a ratio of a region occupied by the notch in the whole cell region) as illustrated in Table 2 (which will be described later). In this case, the liquid optical elements 40A were formed so that the cell region Z and the notch 12K1 both had a square shape, and the notch 12K1 was arranged in a corner of the cell region Z. Other conditions were the same as those in Example 1-1.

Moreover, as Examples 2-5 to 2-8, the liquid optical elements 40B illustrated in FIG. 17 were formed by changing the notch occupancy. Other conditions were the same as those in Examples 2-1 to 2-4.

Further, as Examples 2-9 to 2-12, the liquid optical elements 40B were formed as in the case of Examples 2-5 to 2-8, except that the dimensions of the cell region Z were changed (reduced).

As Examples 2-13 and 2-14, liquid optical elements were formed as in the case of Example 2-1, except that the cell region Z had a rectangular shape, and the notch 12K1 had a square shape (Example 2-13) or a rectangular shape (Example 2-14). The notch occupancy was 2.5% in both of Examples 2-13 and 2-14. In Example 2-14, the ratio between the dimension in a vertical direction and the dimension in a horizontal direction in the notch 12K1 was 1:3.

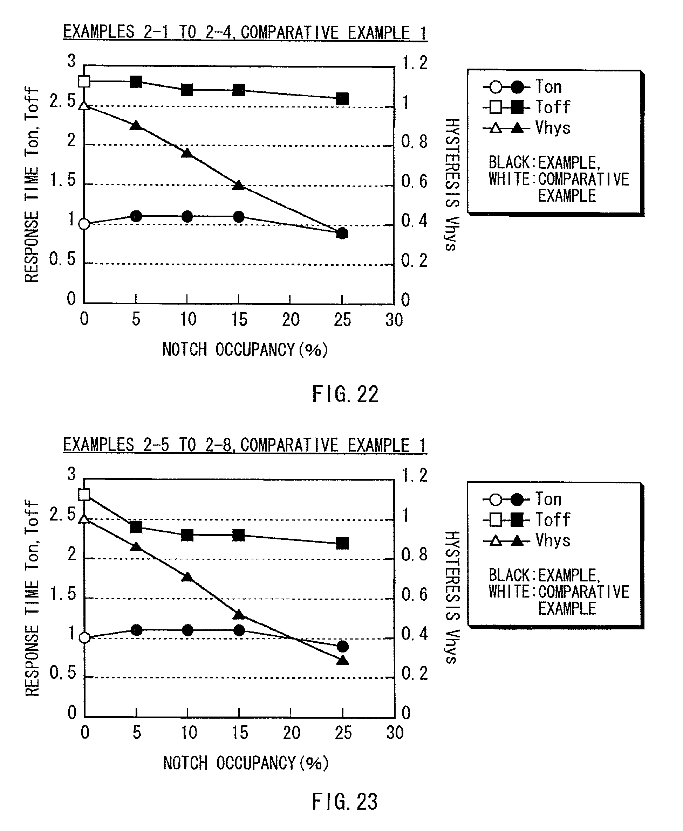

The dependence of transmittance on an applied voltage of Examples 2-1 to 2-14 was examined as in the case of Examples 1-1 to 1-14, and the response times T_{ON} and T_{OFF} and the hysteresis V_{hys} of the transmittance were determined by calculation. The results are illustrated in Table 2 and FIGs. 22 to 25.

**Table 2**

| Shape of cell region Z: square shape or rectangular shape | | | | | | | |
|---|---|---|---|---|---|---|---|
| | CELL REGION Z | | NOTCH | | RESPONSE TIME | | HYSTERESIS V_{hys} |
| | LENGTH | WIDTH | SHAPE | OCCUPANCY (%) | T_{ON} | T_{OFF} | |
| EXAMPLE 2-1 | 1 | 1 | SQUARE | 5 | 1.1 | 2.8 | 0.90 |
| EXAMPLE 2-2 | 1 | 1 | SQUARE | 10 | 1.1 | 2.7 | 0.76 |
| EXAMPLE 2-3 | 1 | 1 | SQUARE | 15 | 1.1 | 2.7 | 0.60 |
| EXAMPLE 2-4 | 1 | 1 | SQUARE | 25 | 0.9 | 2.6 | 0.36 |
| EXAMPLE 2-5 | 1 | 1 | SECTOR | 5 | 1.1 | 2.4 | 0.86 |
| EXAMPLE 2-6 | 1 | 1 | SECTOR | 10 | 1.1 | 2.3 | 0.71 |
| EXAMPLE 2-7 | 1 | 1 | SECTOR | 15 | 1.1 | 2.3 | 0.52 |
| EXAMPLE 2-8 | 1 | 1 | SECTOR | 25 | 0.9 | 2.2 | 0.29 |
| EXAMPLE 2-9 | 0.49 | 0.49 | SECTOR | 5 | 0.5 | 1.3 | 0.67 |
| EXAMPLE 2-10 | 0.49 | 0.49 | SECTOR | 10 | 0.6 | 1.3 | 0.48 |
| EXAMPLE 2-11 | 0.49 | 0.49 | SECTOR | 15 | 0.5 | 1.3 | 0.29 |
| EXAMPLE 2-12 | 0.49 | 0.49 | SECTOR | 25 | 0.5 | 1.3 | 0.19 |
| EXAMPLE 2-13 | 0.32 | 1 | SQUARE | 2.5 | 1.1 | 2.5 | 0.71 |
| EXAMPLE 2-14 | 0.32 | 1 | RECTANGULAR (1:3) | 2.5 | 1.4 | 2.5 | 0.83 |
| COMPARATIVE EXAMPLE 1 | 1 | 1 | - | - | 1 | 2.8 | |
| COMPARATIVE EXAMPLE 2 | 0.49 | 0.49 | - | - | 0.5 | 1.4 | 0.76 |
| COMPARATIVE EXAMPLE 3 | 0.32 | 1 | - | - | 1.1 | 2.8 | 1.00 |

In Table 2, the dimensions of the cell region Z, the response time T_{ON} and the hysteresis V_{hys} each indicate a normalized value on the basis of Comparative Example 1. The response time T_{OFF} indicates a value on the basis of the response time T_{ON} in Comparative Example 1.

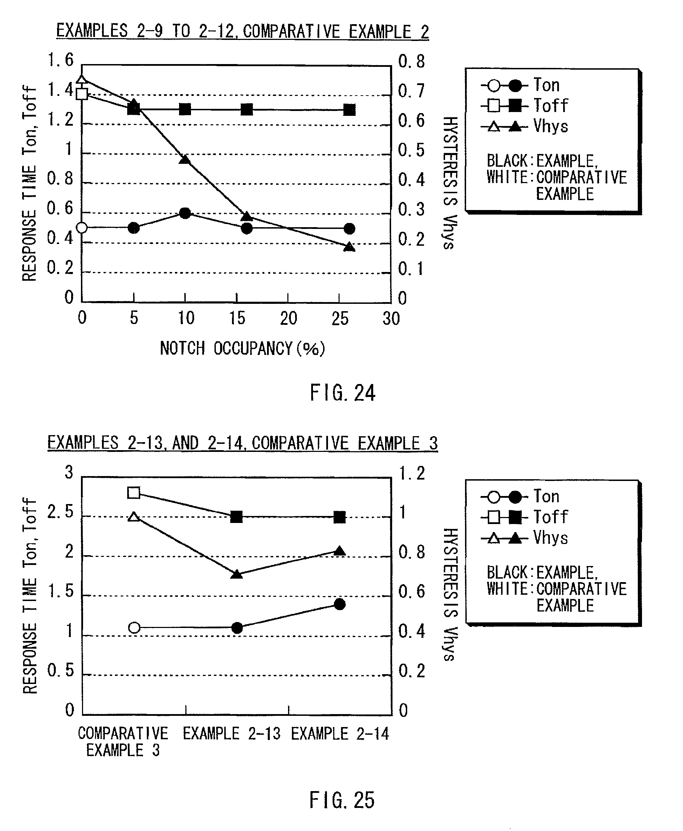

As illustrated in Table 2 and FIGs. 22 to 25, it was confirmed that in the case where the dimensions of the cell region Z were the same, when the notch 12K1 was arranged in the lower electrode 12 as in the case of the examples, while the response times T_{ON} and T_{OFF} were equal to or less than those in the comparative examples in which the aperture or the notch was not included, the hysteresis V_{hys} was able to be reduced. In particular, in comparison with Examples 2-1 to 2-4 (refer to FIG. 22) and Examples 2-5 to 2-8 (refer to FIG. 23), when the notch 12K1 had a sector shape, it was more effective to reduce the response times T_{ON} and T_{OFF} and the hysteresis V_{hys} than when the notch 12K1 had a square shape. Moreover, in comparison with Example 2-13 and Example 2-14 (both refer to FIG. 25), the notch 12K1 more preferably had a square shape than a rectangular shape. It was confirmed that there was a tendency that the larger the notch occupancy was, the more the response times T_{ON} and T_{OFF} and the hysteresis V_{hys} were reduced. Further, unlike Examples 1-1 to 1-14 in which the aperture 12K was arranged in the central part of the cell region Z, even if the notch occupancy was 5%, an effect of improving the response times T_{ON} and T_{OFF} and the hysteresis V_{hys} was clearly exhibited.

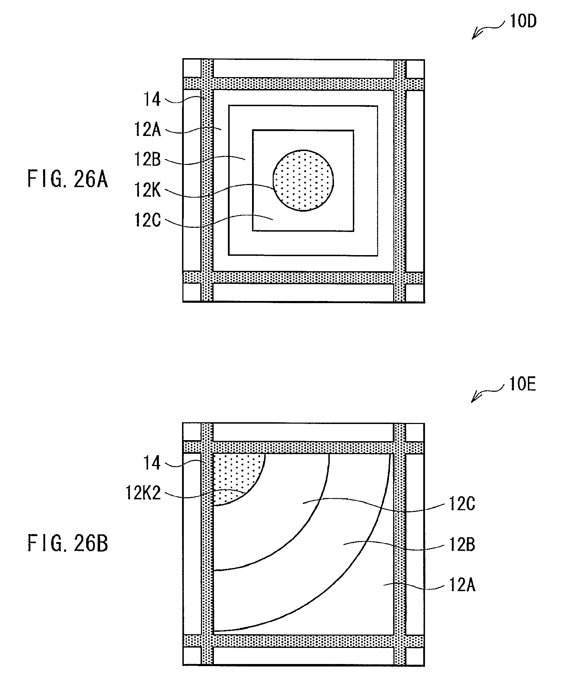

Although the invention is described referring to some embodiments, the invention is not limited to the embodiments, and may be variously modified. For example, in the above-described embodiments, one lower electrode is arranged for one cell region; however, a plurality of divided lower electrodes may be arranged. More specifically, as in the case of a liquid optical element 10D illustrated in FIG. 26A, a plurality of electrode patterns 12A to 12C which are concentrically arranged so as to surround the aperture 12K and are insulated from one another may constitute a lower electrode. Alternatively, as in the case of a liquid optical element 10E illustrated in FIG. 26B, a notch 12K2 may be arranged in a corner of the cell region Z, and a plurality of electrode patterns 12A to 12C sectioned at arbitrary distances from the notch 12K2 may be arranged. In such a case, when the electrode patterns 12A to 12C are individually conducted, for example, the intensity of transmitted light is able to be adjusted in stages with higher precision by applying a voltage to the electrode pattern 12A, the electrode pattern 12B and the electrode pattern 12C in order. Therefore, when a liquid optical element having a plurality of divided lower electrodes is used in an image display section of an image display, it is expected that gray scales are able to be displayed with higher definition.

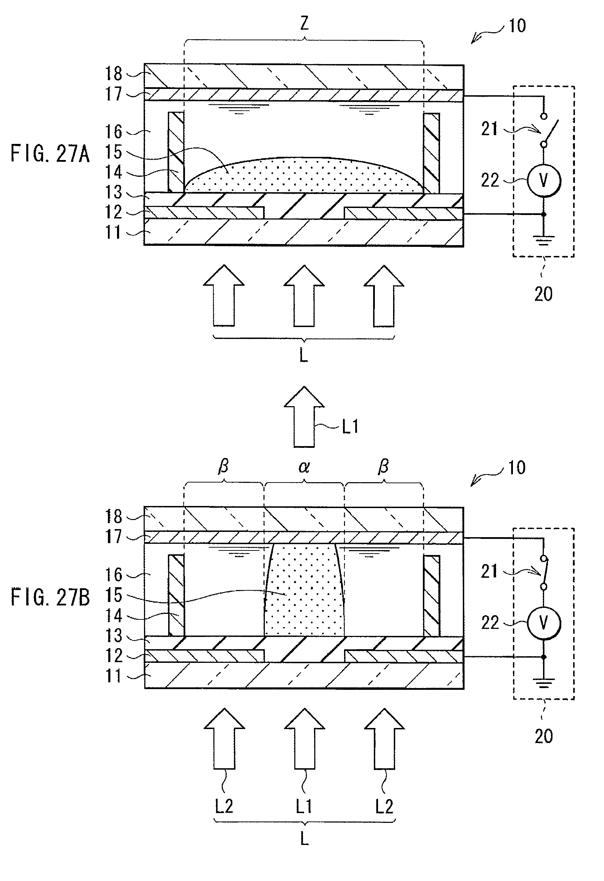

Moreover, as illustrated in FIGs. 27A and 27B, when a voltage is applied between the lower electrode 12 and the upper electrode 17, the nonpolar liquid 15 may come into contact with the hydrophobic insulating film 13 and the upper electrode 17 in the region α corresponding to the aperture 12K. In this case, for example, in the case where the nonpolar liquid 15 is transparent, and the polar liquid 16 is tinted with carbon black or the like to function as a light-shielding body, when a voltage is not applied, the polar liquid 16 blocks the light L (refer to FIG. 27A), and when a predetermined voltage is applied, the polar liquid 16 is able to be used as an optical shutter capable of transmitting the light L therethrough in the region α.

Further, in the above-described embodiments, the case where the liquid optical element is applied to an image display is described; however, the invention is not limited to the case. For example, the liquid optical element may be applied to any other device such as an optical diaphragm.

It should be understood by those skilled in the art that various modifications, combinations, sub-combinations and alterations may occur depending on design requirements and other factors insofar as they are within the scope of the appended claims or the equivalents thereof.

## Claims

1. A liquid optical element comprising:
an insulating film (13);
a wall structure (14) arranged upright on the insulating film (13), and surrounding a region on the insulating film (13);
a first electrode (12) arranged, in contact with the insulating film (13), on an opposite side of the insulating film (13) from a side where the wall structure (14) is arranged;
a second electrode (17) arranged, so as to face the first electrode (12), on an opposite side of the insulating film (13) from a side where the first electrode (12) is arranged; and
a polar liquid (16) and a nonpolar liquid (15) sealed between the insulating film (13) and the second electrode (17), and keeping a state where the polar liquid (16) and the nonpolar liquid (15) are separated from each other, one of the polar liquid (16) and the nonpolar liquid (15) being transparent, the other being opaque,
wherein at least one of the first electrode (12) and the second electrode (17) has an aperture (12K) or a notch in a region corresponding to the region surrounded by the wall structure (14).

2. The liquid optical element according to claim 1, wherein
the insulating film (13) exhibits an affinity for the nonpolar liquid (15) under a zero electric field.

3. The liquid optical element according to claim 1, wherein
the aperture (12K) is arranged in a central part of the first electrode (12) within the region corresponding to the region surrounded by the wall structure (14).

4. The liquid optical element according to claim 1,
the notch (12K1) is arranged in a corner of the first electrode (12) within the region corresponding to the region surrounded by the wall structure (14).

5. The liquid optical element according to claim 1, comprising:
a drive element (41) controlling a voltage to be applied between the first electrode (12) and the second electrode (17),
wherein the drive element (41) is arranged in a position corresponding to the aperture (12) or the notch.

6. The liquid optical element according to claim 1, wherein
at least one of the first electrode (12) and the second electrode (17) is divided into a plurality of concentric electrodes arranged around the aperture (12) or the notch.

7. The liquid optical element according to claim 1, wherein
the polar liquid (16) is transparent, while the nonpolar liquid (15) is opaque.

8. The liquid optical element according to claim 1, wherein
the polar liquid (16) is opaque, while the nonpolar liquid (15) is transparent, and
the polar liquid (16) comes into contact with both of the insulating film (13) and the second electrode (17) when a voltage is applied between the first electrode (12) and the second electrode (17).

9. The liquid optical element according to claim 1, wherein
a wall surface of the wall structure (14) exhibits hydrophilicity.
